# NEW EUROPEAN PATENT SPECIFICATION

(11) **EP 3 167 004 B2**
(45) Date of publication and mention of the opposition decision: **30.11.2022**
(45) Mention of the grant of the patent: 16.10.2019
(21) Application number: 15744754.1
(22) Date of filing: 30.06.2015
(51) Int. Cl.: C08L 63/00

(54) **DELAYED CURING HIGH TG CRASH DURABLE ADHESIVE**
AUFPRALLBESTÄNDIGER KLEBSTOFF MIT VERZÖGERTER HÄRTUNG UND HOHEM TG-GEHALT
ADHÉSIF RÉSISTANT AUX IMPACTS À TG ÉLEVÉE ET À DURCISSEMENT RETARDÉ

(30) Priority: 08.07.2014 US 201462021934 P
(43) Date of publication of application: 17.05.2017
(73) Proprietor: Dow Global Technologies LLC, Midland, MI 48674 (US)
(72) Inventor: HAAG, Benjamin Alexander, CH-8810 Horgen (CH); LUTZ, Andreas, CH-8810 Horgen (CH); GROSSNICKEL, Cathy, CH-8810 Horgen (CH)
(74) Representative: Beck Greener LLP
(86) International application number: PCT/US2015/038415
(87) International publication number: WO 2016/007324

(56) References cited:
- EP-A1- 2 128 182
- WO-A1-2013/070415

## Description

### FIELD OF THE INVENTION

The present invention relates to high Tg epoxy adhesives with good mechanical properties, suitable for use, e.g., in the manufacture of automobiles.

### INTRODUCTION

During automobile manufacture, crash durable structural adhesives are generally applied in the body-in-white before e-coating. The last step in the body shop usually comprises an e-coat oven where the full car body is heated to 160 to 200° C curing the e-coat as well as the adhesive, and providing corrosion resistance.

Various grades of steel and thicknesses in the car body warm up and cool down unequally during ramp phases of the e-coat process. As a result of such temperature gradients, all parts of the car body are exposed to tremendous strain. Generally, the stress is absorbed either by the bond line (possibly resulting in de-bonding), or by the sheet metal part (possibly leading to distortion). De-bonding during ramp phases in the e-coat oven is typically expressed by areas of adhesive failure mode. It has not been possible so far to obtain adequate levels of stress compensation, especially stress occurring in bonding of dissimilar materials or materials with different CLTEs (coefficient of linear thermal expansion), e.g., aluminum in a steel frame.

U.S. Patent Application Pub. 2010/0292415 discloses a thermoset resin, including the reaction product of: an epoxy resin mixture including at least one cycloaliphatic epoxy resin; a cycloaliphatic anhydride hardener; and a catalyst; wherein the reaction product has a glass transition temperature greater than or equal to 210° C. Also disclosed is a process for forming a thermoset resin, including: admixing two or more epoxy resins and a cycloaliphatic anhydride hardener to form a curable composition, wherein the epoxy resins include at least one cycloaliphatic epoxy resin; thermally curing the curable composition at a temperature of at least 150° C to result in a thermoset resin having a glass transition temperature of at least 210° C. Such curable compositions may include: 35 to 65 weight percent of an epoxy resin mixture having at least one cycloaliphatic epoxy resins; 35 to 65 weight percent of a cycloaliphatic anhydride hardener; and from greater than 0 to 10 weight percent of a catalyst.

WO 2009094295 discloses structural adhesives prepared from an epoxy resin and at least 15% by weight of an epoxy-terminated, polyphenol-extended toughener. The structural adhesive is substantially devoid of a thixotropic polyurea dispersion, and may contain one or more rubbers. Despite the absence of the polyurea dispersion, the structural adhesive has a high glass transition temperature and good impact peel strength at low temperatures.

There remains a need for higher glass transition temperatures of adhesives while maintaining good levels of impact peel resistance or crash performance.

### SUMMARY OF THE INVENTION

It is believed that a structural adhesive that has both high glass transition temperature (Tg) and high impact peel strength could maintain good crash performance, and could also prevent de-bonding (and associated adhesive failure modes) and distortion of frame and body panels. Both issues are particularly critical in terms of bonding strength and anti-corrosion performance. For improved corrosion resistance and enhanced bond strength, the cross-linking of the adhesive formulation happens with a certain latency to minimize shrinkage of the adhesive during the curing process and generation of strain in the bond line.

A reduction or complete elimination of the amount of accelerator in a crash durable epoxy adhesive shifts the onset temperature higher during the curing reaction. This allows peak curing temperatures to be shifted higher. It has unexpectedly been found that doing so causes reduction in the curing speed and observed adhesive failure mode.

Moreover, it has unexpectedly been found that using multi-functional epoxy resins likely increases Tgs of the adhesive formulations. In combination with toughener additives, impact peel performance for crash resistance remains on a good to high level. Moreover, structural adhesives with high Tgs also possess high mechanical strength at elevated temperatures and a higher stability over a broad temperature range. In application trials, such properties prove to be superior over normal grade structural adhesives and afford cohesive failure mode instead of de-bonding.

We have unexpectedly found that use of a trifunctional epoxy resin provides several benefits, including enhancing a high glass transition temperature (Tg) of the cured structural adhesive.

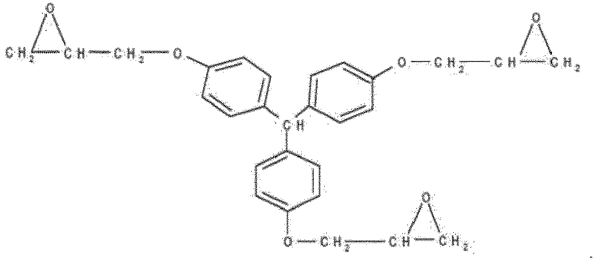

The present invention provides an epoxy composition comprising: a) 2 to 30 wt.% of a trifunctional epoxy resin, based on the weight of the epoxy composition; b) a DGEBA epoxy resin; c) a polyphenolic blocked polyurethane; d) a filler; e) a hardener; and f) a curing accelerator; wherein the trifunctional epoxy resin comprises an epoxy based on tris-(hydroxyl phenyl)-methane.

The epoxy composition comprises 2 to 30 wt% of the trifunctional epoxy resin, based on weight of the epoxy composition. The trifunctional epoxy resin comprises an epoxy based on tris-(hydroxyl phenyl)-methane, which more preferably comprises a compound of formula:

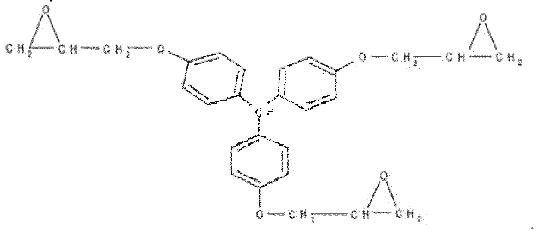

The present invention also includes a cured adhesive composition obtained by curing the inventive epoxy composition. Preferably, the cured adhesive composition has a Tg at least 110° C, more preferably at least 120° C.

### BRIEF DESCRIPTIONS OF THE DRAWINGS

Figure 1a shows correlation between Tg (left axis), impact peel resistance, and trifunctional LER (right axis) for several formulations. Figure 1b shows correlation between Tg and impact peel resistance for several formulations.
Figures 2a and 2b, respectively, show storage modulus G'(a) and loss factor δ(b) over temperature via Dynamic Mechanical Analysis (DMA) of EP0, EP284 and EP306.
Figure 3 shows differential scanning calorimetry (DSC) of EP0, EP284 and EP306.
Figure 4a shows a model test system comprising an aluminum strip (top) which is fixable at one end to a steel profile (bottom). Figure 4b shows another view of the aluminum strip and steel profile.
Figure 5 illustrates the results of the model test system on compositions E0 (top) and E284 (bottom).

### DETAILED DESCRIPTION OF THE INVENTION

Compositions of the present invention preferably comprise an epoxy component, a toughener and a hardener. Compositions also include a filler and a curing accelerator. The epoxy component comprises a trifunctional epoxy resin, and preferably also comprises a liquid and/or solid difunctional epoxy resin.

Any trifunctional epoxy resin that is according to the claims may be used in compositions of the present invention. Preferably, the trifunctional epoxy resin increases the Tg of the cured adhesive compared to the Tg of a reference composition that comprises no trifunctional epoxy, but is otherwise identical. The amount that the Tg increases is a function of both the identity and amount of the trifunctional epoxy resin. The Tg is increased, in relation to a reference formulation, by at least 10 °C, more preferably by at least 20 °C, 30 °C, 40 °C, 50 °C, or 60 °C.

The trifunctional epoxy resin comprises an epoxy based on tris-(hydroxyl phenyl)-methane. The trifunctional epoxy resin comprises the structure R-(OCH₂(CHOCH₂))₃, where R is an organic moiety, comprising 3 aromatic portions. R is preferably of low molecular weight, e.g., less than 400 daltons, more preferably less than 300 daltons, more preferably less than 260 daltons. R preferably has a molecular weight of at least 13 daltons, more preferably at least 50 daltons, more preferably at least 100 daltons, more preferably at least 200 daltons. A preferred molecular weight includes 241 daltons. A preferred trifunctional epoxy resin includes TACTIX 742 resin (Huntsman), a tris-(hydroxyl phenyl)-methane-based epoxy, having the following formula:

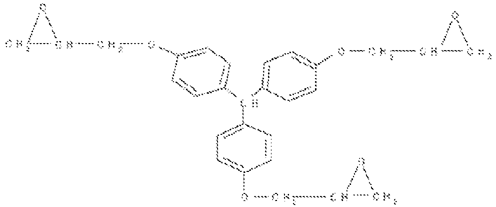

The trifunctional epoxy comprises at least 2 wt%, more preferably at least 5 wt%, more preferably at least 10 wt%, based on the weight of the adhesive composition. The trifunctional epoxy comprises up to 30 wt%, more preferably up to 25 wt%, more preferably up to 20 wt%, based on the weight of the adhesive composition. Some preferred amounts are shown in the Examples.

Any combination of difunctional epoxy resins may be used in the present invention. The epoxy resins may be solid, liquid, or a combination of solid and liquid. Combinations of solid and liquid resins are preferred because proportions can be adjusted in order to obtain a composition having a desired viscosity, thereby permitting better processability.

Any difunctional epoxy resins, or combination of two or more thereof, may be used in the present invention. Preferred difunctional epoxy resins comprise diglycidyl ethers of a bisphenol. DGEBA epoxy resins (diglycidyl ethers of bisphenol A) are more preferred.

Any amount of difunctional liquid and/or solid epoxy resin may be used in compositions of the present invention. Suitable viscosity may be obtained by adjusting the proportion of solid and liquid resins, preferably DGEBA resins. Combinations of solid and liquid difunctional epoxy resins, including commercially available compositions, may also be used. Semisolid difunctional epoxy resins may also be used.

Difunctional epoxy resins preferably comprise at least 10 wt%, more preferably at least 15 wt%, more preferably about 20 wt% of the composition. Difunctional epoxy resins preferably comprise up to 60 wt%, more preferably up to about 55 wt%, more preferably up to about 50 or 45 wt% of the composition. Some preferred amounts are shown in the Examples.

Any proportion of liquid to solid difunctional epoxy resin may be used. As a general matter, compositions of the present invention may suitably comprise at least 10 wt% liquid epoxy resin, preferably at least 20 or 30 wt%; and 0 to 30 wt% solid epoxy resin, preferably 10 wt%, more preferably 20 wt%, one or both epoxy resins preferably comprising, or consisting essentially of DGEBA or reaction products thereof. Liquid epoxy resins comprising DGEBA or reaction products thereof possessing an averaged molecular weight of 700 to 1100 daltons, preferably <700 daltons are preferred. Solid epoxy resins comprising DGEBA and reaction products thereof possessing an averaged molecular weight of 700 to 1100 daltons, preferably >700 daltons are preferred.

Compositions of the present invention comprise a toughener, comprising a polyphenolic blocked polyurethane. Preferred polyphenolic blocked PU tougheners can be made according to U.S. Patent No. 8,278,398. The polyphenolic blocked PU preferably helps to increase the impact peel strength of the cured adhesive.

The polyphenolic capped PU is preferably a liquid or low-melting elastomeric material that contains capped or blocked isocyanate groups. The elastomeric portion of the elastomeric toughener includes one or more soft segments such as a polyether, a polybutadiene, or a polyester. Particularly preferred soft segments include poly(ethylene oxide) blocks, polypropylene oxide) blocks, poly(ethylene oxide-co-propylene oxide) blocks, poly(butylene oxide) blocks, poly(tetrahydrofuran) blocks, poly(caprolactone) blocks and the like. These soft segments typically have a molecular weight of from 1000 to 10,000 daltons each, preferably from about 1500 to 5000 daltons. An especially preferred type of soft segment is a poly(tetrahydrofuran) block having a weight of from 2200 to 4500 daltons.

The polyphenolic capped PU contains at least one blocked or capped isocyanate group per molecule. It preferably contains an average of at least 2 such groups per molecule, but typically no more than 6 and preferably no more than about 4 blocked or capped isocyanate groups per molecule. Preferred capping groups include a polyphenol, or polyallylpolyphenol such as o,o-diallyl bisphenol A.

A convenient way to produce the polyphenolic capped PU is by forming an isocyanate-terminated prepolymer, and then reacting the remaining isocyanate groups with the capping or blocking agent. The isocyanate-terminated prepolymer is prepared by reacting a polyether polyol or polyester polyol, which corresponds to the structure of the soft segment of the reactive tougher, with an excess of a polyisocyanate. The polyisocyanate preferably contains aliphatic isocyanate groups. Preferred polyisocyanates are hexamethylene diisocyanate and isophorone diisocyanate.

The polyphenolic capped PU should be soluble or dispersible in the remainder of the components of the resin component A. The polyphenolic capped PU preferably has a viscosity at 45° C which is not greater than 1000 Pa·s and more preferably no more than about 800 Pa·s. Preferably, the weight average molecular weight of the toughener is about 8,000 or greater, and more preferably about 10,000 or greater. Preferably, the weight average molecular weight of the toughener is about 80,000 or less, and more preferably about 40,000 or less. Molecular weights as used herein are determined according to GPC analysis.

General methods for preparing these elastomeric tougheners are described, for example, in U.S. Pat. No. 5,278,257, WO 2005/118734, U.S. Published Patent Application No. 2005/0070634, U.S. Patent No. 7,910,656, U.S. Patent No. 8,404,707, EP 1 602 702A and EP-A-0 308 664. Some preferred tougheners include bis-phenol blocked PU such as RAM 1087.

Any suitable amount of polyphenolic blocked PU can be used in resin compositions of the present invention. Preferably, a sufficient amount is used to beneficially affect the impact peel strength of the cured adhesive. In general, resin compositions of the present invention comprise at least 10 wt%, or 15 wt% polyphenolic blocked PU, based on the weight of the resin composition. In general, resin compositions of the present invention comprise up to 30 wt%, or 25 wt% polyphenolic blocked PU, based on weight of the resin composition.

Optional fillers include mineral fillers, such as calcium carbonate, calcium oxide, and talc. Fillers ensure good failure mode behavior, increased humidity resistance, improved corrosion resistance, increased modulus and/or superior processability. Calcium carbonate (e.g., sold under trade name OMYA^{®}), can be used to reduce shrinkage and increase corrosion resistance. Calcium oxide (e.g., sold under the trade name CHAUX VIVE) is a humidity scavenger that may help to preserve a partially-cured epoxy adhesive prior to final curing. Talc is available, e.g., under the trade name MISTROFIL^{®} or SIERALITE^{®}, and aluminum magnesium silicate (wollastonite) is available, e.g., under the trade name NYAD^{®} 200. Silica, preferably hydrophobic fumed silica may also be used, such as AEROSIL R202 or AEROSIL R805.

When used, fillers may be present in any useful amount, and can be determined by those of ordinary skill in the art using this document as guidance. Typically, fillers may be present in amounts more than or about 10 wt%, more preferably more than or about 15 wt% or 18 wt% of the epoxy adhesive. Fillers may be present in amounts less than or about 25 wt%, more preferably less than or about 20 wt% of the epoxy adhesive.

The hardener, preferably for a 1K adhesive composition, preferably comprises a latent hardener. Any latent hardener that does not cause hardening under ambient conditions ("ambient conditions" meaning, e.g., typical room temperature and normal lighting conditions) may be used. A latent hardener that causes the epoxy adhesive to be curable by application of heat is preferred. Some preferred hardeners include dicyandiamide, imidazoles, amines, amides, polyhydric phenols, and polyanhydrides. Dicyandiamide (also known as DICY, dicyanodiamide, and 1- or 2-cyanoguanidine) is preferred. DICY (CAS 461-58-5) has empirical formula C₂N₄H₄, molecular weight 84, and structural formula:

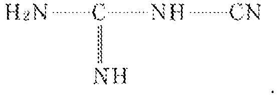

Any amount of hardener may be used as appropriate for any particular composition according to the present invention. The amount of hardener is preferably at least 1 wt%, more preferably at least 2 wt%, more preferably at least 3 wt% of the epoxy adhesive. The amount of epoxy hardener is preferably up to about 6 wt%, more preferably up to about 5 wt% or 4 wt% of the epoxy adhesive. Some preferred amounts include 3.1, 3.3, and 3.6 wt%.

Expressed in terms of weight ratio of epoxy:hardener, preferred ratios are at least 3 or 4. Preferred weight ratios of epoxy:hardener are up to 6 or 7. Some preferred ratios include 5, 5.75, and 6. Ranges formed from these ratios are also preferred.

One or more curing accelerators (catalysts) may be optionally used to, e.g., modify the conditions under which a latent catalyst becomes catalytically active. The type and amount of accelerator can be controlled to impart good cross-linking properties, increased E-modulus, improved curing profile, and/or lower Tₒₙₛₑₜ (curing onset temperature). It has been found that reduction or elimination of curing accelerator in the inventive compositions shifts the curing onset temperature upward, e.g., by about 10°, 20°, or 30° C. Thus, peak curing temperatures can be increased, e.g., by 5°, 10°, or 20° C demonstrating delayed curing behavior.

When used, a preferred curing accelerator may include amines, such as amino phenols, ureas and imidazoles. More preferred accelerators include amines, such as amino phenols. A preferred accelerator is EP 796 (2,4,6-tris(dimethylaminomethyl)phenol integrated into a poly(p-vinylphenol) matrix as described in EP-A-0 197 892). More preferred accelerators EPCAT50 (2,4,6-tris(dimethylaminomethyl)phenol integrated into a polyphenolic resin matrix as described in 69632-WO2012000171). Glycidyl esters of versatic acid (e.g., sold as CARDURA E10, from Momentive) are also preferred. Other accelerators can include 2,4,6-tris(dimethylaminomethyl)phenol integrated into a poly(p-vinylphenol) matrix, or Rezicure matrix such as described in U.S. Patent No. 4,659,779 (and its family members U.S. Patents No. 4,713,432 and 4,734,332; and EP-A-0 197 892).

When used, curing accelerator may be present in any amount that suitably adjusts the activation condition of latent catalyst. Preferably, a curing accelerator may be omitted altogether, or else present in amounts more than or about 0.1 wt%, 0.2 wt%, 0.3 wt%, or 0.4 wt% of the epoxy adhesive. Preferably, curing accelerator may be present in amounts less than or about 1.5 wt%, more preferably less than or about 1 wt%, or 0.7 wt% of the epoxy adhesive.

Generally, cured adhesives comprising an increased Tg demonstrate more brittle mechanical performance. It is generally observed that mechanical properties, such as impact peel resistance tested at 23° C, of cured adhesives decrease dramatically when its Tg is raised above 100° C. It has been unexpectedly found that the adhesives of the present invention maintain good mechanical properties, e.g., impact peel strength, even at Tgs of 110° C, 120° C, 130° C, 140° C, 150° C, or higher.

Preferably, the impact peel strength of the cured adhesive is at least 8, 10, 12, or 15 N/mm. While there is no preferred upper limit, the impact peel strength will generally be less than or about 25 or 20 N/mm.

### EXAMPLES

### Test Methods:

Rheology is measured according to GEX 335 method: measured on Bohlin instrument (Up-Down, 0.1-20s-1) at 45°C; viscosity and yield stress determined using Casson model.

Lap shear strength is measured according to DIN EN 1465: on Thyssen-Krupp steels (25×100 mm) DC06A+ZE 75/75 (electro galvanized steel) combined with DX56D+Z100 (hot-dipped galvanized steel); re-greaed with Anticorit PL 3802-39S.

Impact peel resistance is measured according to ISO 11343: on Voest steels DC04+ZE 50/50 (electrogalvanized steel) combined with DX56D Z100MB (hot-dipped galvanized); re-greased with Anticorit PL 3802-39S; measured at 23°C and -40°C.

E-Modulus, tensile strength and elongation at break are measured according to DIN EN ISO 527-1.

Differential Scanning Calorimetry (DSC): interval 25-250°C, rate 10°C/min at a Mettler Toledo.

Dynamic Mechanical Analysis (DMA): interval 40-220°C, rate 2°C/min, frequency 1Hz at a TA instrument AR 2000 ex.

### Sample Preparation:

Metal coupons of given steel grade are cleaned with acetone and wiped with a paper towel, before being re-greased with 3 g/m² of indicated oil on one side. The adhesive composition is applied to the oiled side of the coupon. Glass beads (0.2 mm) are sprinkled onto the adhesive layer before overlaying the test coupons; preferably 10 mm overlap. Metal clips are used to hold the two coupons together during the baking cycle. All coupon/adhesive assemblies are cured in an oven, if not indicated otherwise, at 180° C for 30 minutes.

Coupons for impact peel testing having ISO 11343 test geometry (30 mm overlay, 20 mm width) are subjected to 90 J impact load at a drop weight speed of 2 m/s. Impact peel strength is measured at average impact load at plateau using an Zwick-Roell impact tester. The test results are shown in Table 3.

### Example 1: Formulation Series

A listing of raw materials illustrated in the following examples is provided in Table 1.

Several adhesive formulations are prepared from the ingredients and amounts shown in Tables 2a, 2b, and 2c.

**Table 1**

| **Raw material** | | **Chemical Description** | **Supplier** |
|---|---|---|---|
| | **A) Epoxy Resins** | | |
| D.E.R. 331 | | Liquid D.E.R. Bis A based | Dow |
| D.E.R. 330 | | Liquid D.E.R. Bis A based | Dow |
| D.E.R. 671 | | Solid D.E.R. Bis A based | Dow |
| Tactix 742 | | multi-functional epoxy resin | Huntsmann |
| Tactix 556 | | multi-functional epoxy resin | Huntsmann |
| Tactix 756 | | multi-functional epoxy resin | Huntsmann |

| | **B) Toughener and Flexibilizers** | | |
|---|---|---|---|
| Struktol 3604/3614 | | LER-rubber | Schill & Seilacher |
| MX-153 | | Core-shell-rubber (CSR) | Kaneka |
| RAM 1087 | | Bis-phenol capped PU toughener | Dow, Schill & Seilacher |
| RAM DIPA 20003 | | Amine capped PU toughener | Dow, Schill & Seilacher |
| RAM Allph 29002 | | phenol capped PU toughener | Dow, Schill & Seilacher |
| RAM 965 | | Bis-phenol capped PU toughener | Dow, Schill & Seilacher |

| | **C) Curing System** | | |
|---|---|---|---|
| Accelerator A | | 2,4,6-tris(dimethylaminomethyl)phenol integrated into a poly(p-vinylphenol) | prepared according to US patent 4,713,432 and WO2012000171 |

| | **D) Additive** | | |
|---|---|---|---|
| Araldite DW0133 red | | colorant | Huntsman |

| | **E) Hardener** | | |
|---|---|---|---|
| Amicure CG 1200G | | Dicyandiamide | Airproducts |

| | **F) Fillers** | | |
|---|---|---|---|
| Nyad 200 | | Wollastonite | NYCO |
| Omya BSH | | Calcium-carbonate | Omya |
| Chaux vive | | Calcium oxide | Lhoist |
| Spheriglass 2024 | | Glass beads | Potters |
| Mistrofil | | talc (>98 wt%) | Luzenac |
| Talk 1N | | Talc | |
| Cardura E10 | | | Momentive |
| Mowital B60 HH | | wetting agent | KSE |
| Aerosil R202 | | Hydrophobic Fumed silica | Evonik |
| Aerosil R805 | | Hydrophobic Fumed silica | Evonik |

The formulation basis 'EP0' (reference formulation) mainly comprises D.E.R. 331, and XZ 92579, a blend comprising solid D.E.R dissolved by D.E.R. 331, preferably in a 1:5
weight ratio. EP0 has a Tg of about 100° C measured by DSC methods.

Partial substitution of liquid D.E.R. and XZ 92579 by 16-20w% trifunctional epoxy resin dramatically increases the Tg of the corresponding formulation by 24-37° C up to a Tg of 141° C (EP270-272). Increasing the amount of filler such as Omya BSH by 1.5 wt% also positively influences the Tg by 7 °C to a value of 148° C (EP273).

Impact peel resistance for EP270-273 ranges from 13-20 N/mm. In comparison to reference formulation EP0, the loss of crash resistance is small. Switching from LER-rubber such as Struktol 3604 and PU based tougheners like RAM Dipa to CSR (core-shell rubber) provides further significant increase of Tg of the corresponding formulation EP274 to 157° C. Small changes in the amount of trifunctional LER (15 to 23 wt%) have a tremendous impact on the Tg (EP277, 278, 283, 284, 306) providing values of 130 to 157° C.

Remarkably, the impact values are not significantly affected as usual observed with epoxy based adhesives. Various amounts and types of toughener and LER-rubber adducts were tested (EP277-281). Phenol-capped PU tougheners prove to be beneficial for Tg improvements. However, amine-capped tougheners provide similar results while affording extended shelf life for excellent processability. Substituting LER-rubber with CSR such as MX153 affords a similar Tg, but reduces impact peel resistance. Thus, formulations (EP284, EP306) comprising amounts of 17 to 13 wt% trifunctional LER, 8 to 10 wt% LER-rubber and 14 to 17 wt% amine-capped PU toughener prove to possess a preferable balance between high Tg (140° C) and good impact peel resistance (9 to 18 N/mm).

Unexpectedly, using phenol-capped PU toughener such as in EP383 enhances the mechanical performance at higher temperatures and pushes the Tg to higher temperatures (143° C), while maintaining good impact peel performance of 15 N/mm. Illustrating the effect of trifunctional LER, formulation EP384 shows, in absence of trifunctional epoxy resin, a Tg of only 125° C, despite the fact that toughening components were completely removed from the formulations. By using trifunctional epoxy resins, it is possible to simultaneously obtain a high Tg, while implementing the toughening technology.

Similarly, component of LER-rubber like Struktol 3604 in formulation EP306 can be substituted by the same amount of CSR like MX 153, an increased toughener content of amine-capped PU-toughener, and a decreased amount of trifunctional LER (EP339), while maintaining impact peel resistance and achieving a high Tg of 153° C.

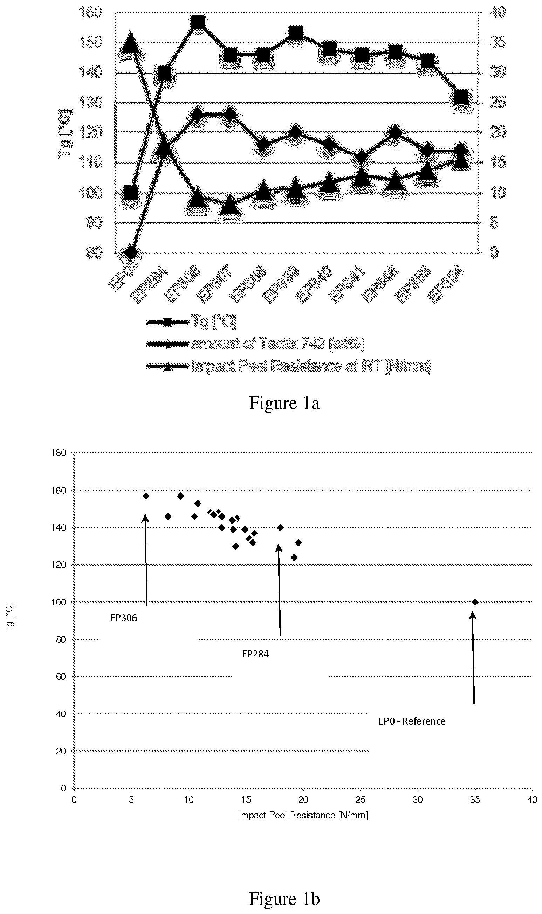

However, various amounts and types of toughening agent did not significantly improve the impact peel resistance at this high level of Tg (EP307, 308, 340, 341, 346, 353, 354). As seen in Figure 1a, the amount of trifunctional LER in the formulation had the greatest impact on the Tg of the cured adhesive. As seen in Figure 1b, in general, Tg's of structural epoxy based adhesives of the present invention correlate well with impact peel resistance.

### Example 2: Rheology and Mechanical Properties

Several formulations from Example 1 are tested for rheological (pre-curing) and mechanical (post-curing) properties. The results are shown in Table 3.

Surprisingly, increasing amounts of trifunctional LER as replacement for difunctional liquid epoxy resins such as D.E.R. 331 decreases the viscosity (EP270-354) to a small extend in comparison to the reference formulation EP0.

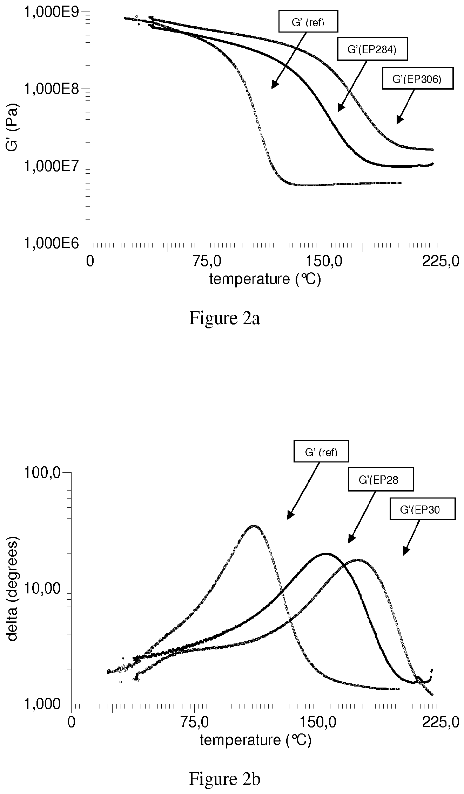

In general, mechanical stability of epoxy adhesives or polymers is steady up to a temperature close to its glass transition temperature (Tg). The DMA (Dynamic Mechanical Analysis; Fig. 2a and 2b) illustrates the mechanical properties of polymers at various temperatures or over a temperature range. A high Tg primarily means a high stability of mechanical properties and performance over a broad temperature range. As depicted, mechanical properties, like lap shear or tensile strength, of high Tg variations of structural adhesives such as EP284 or EP306 show similar values over a wide temperature range up to high temperatures lower than their Tg; in contrast to usual structural adhesives like EP0.

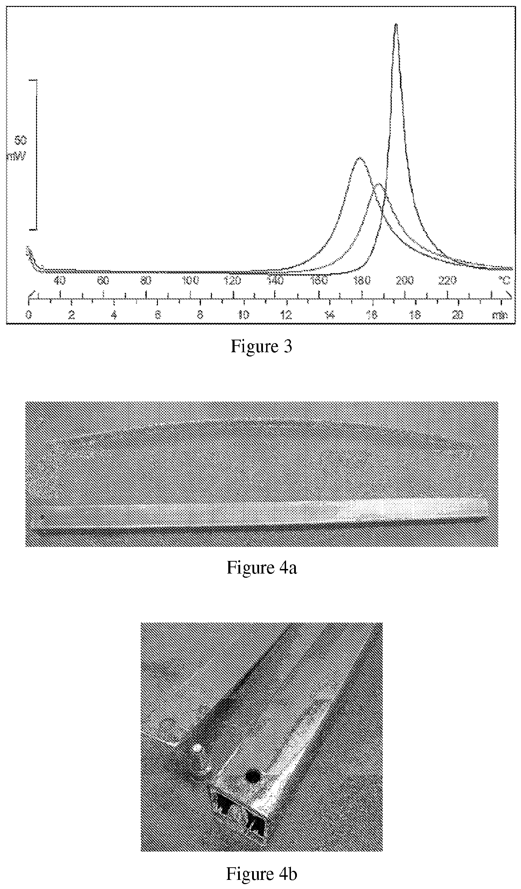

Moreover, "delayed curing" namely the start of the cross-linking reaction at higher temperatures due to lower catalyst content also proves to be beneficial for improved Tg's (EP284 and EP306; Fig. 3).

### Example 3: Model Test

A model test system is developed to test mechanical strength of structural adhesives bonding dissimilar material during cool down phase. An aluminum strip which is fixed at one end by a screw is bonded on a steel profile. See Figures 4a and 4b. While curing, the strip of aluminum is aligned along the lateral axis of the steel profile by clamps allowing free movement and elongation as well as shrinkage due to thermal expansion. In consequence, maximal strain is directed along the bond line and maximal shift is frozen at high temperatures, whereby the structural adhesive cures completely. During the cool down phase, the bond line absorbs all strain, whereas a high bonding strength at elevated temperatures is required in order to avoid de-bonding. De-bonding or a lack of adhesion is typically expressed by an adhesive failure mode. Thus, de-bonded areas exhibit spots of shining metal surface (adhesive failure mode). In contrast, opaque areas represent sufficient bond strength during cool down and at ambient temperature (cohesive failure mode).

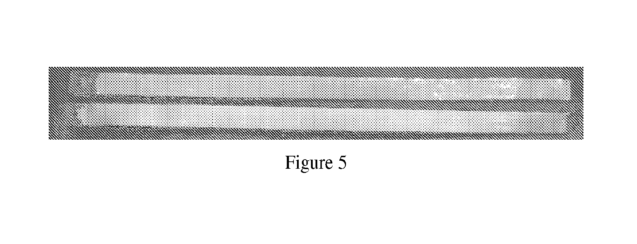

Figure 5 shows the results of this model test system on compositions E0 (top) and E284 (bottom). Surprisingly, the E284 with a high Tg and a steady performance of mechanical strength over a broad temperature range shows cohesive failure mode over the whole bond line area. In contrast, the standard adhesive E0 displays de-bonded areas with adhesive failure mode at the opposite end which has not been fixed. As expected, the mechanical stress is significantly higher at the end with the pin, since the aluminum strip is only allowed to expand in a single direction during the curing process.

Preliminary tests illustrate the superior mechanical performance of high Tg variations of EP284 over E0.

**Table 2a**

| Formulation | | Tactix 742 | Tactix 556 | Tactix 756 | DER 331 | DER 671 | LER-rubber | CSR | Toughener A | | Toughener B | Toughener C | Accelerator A | hardener | fumed silica | mineral filter | colorant | Tg | Impact Peel Resist. at RT [N/mm] |
|---|---|---|---|---|---|---|---|---|---|---|---|---|---|---|---|---|---|---|---|
| | | [wt%] | [wt%] | [wt%] | [wt%] | [wt%] | [wt%] | [wt%] | [wt%] | | [wt%] | [wt%] | [wt%] | [wt%] | [wt%]] | [wt%]] | [wt%] | [°C] (DSC) | |
| EP0 | Ref. | - | - | - | 35.3 | 15.7 | 8 | - | 14 | | - | - | 0.84 | 4.3 | 8 | 13.46 | 0.4 | 100 | 35 |
| EP270 | Ref.. | 16 | - | - | 25.0 | 10.0 | 8 | - | 14 | | - | - | 0.84 | 4.9 | 8 | 12.86 | 0.4 | 124 | 19.2 |
| EP271 | Ref. | 20 | - | - | 22.5 | 8.5 | 8 | - | 14 | | - | - | 0.84 | 5 | 8 | 12.76 | 0.4 | 137 | 15.7 |
| EP272 | Ref. | 18 | - | - | 33.0 | 0.0 | 8 | - | 14 | | - | - | 0.5 | 5.5 | 8 | 12.6 | 0.4 | 141 | |
| EP273 | Ref. | 18 | - | - | 32.0 | 0.0 | 8 | - | 14 | | - | - | 0 | 5.5 | 8 | 14.1 | 0.4 | 148 | 12.6 |
| EP274 | Ref. | 18 | - | - | 35.0 | 0.0 | - | 21.7 | - | | - | - | 0 | 6.6 | 4.5 | 13.8 | 0.4 | 157 | 6.3 |
| EP277 | Ref. | 16 | - | - | 33.0 | 0.0 | 8 | - | 15 | | - | - | 0.5 | 4.4 | 8 | 14.7 | 0.4 | 130 | 14.1 |
| EP278 | Ref. | 18 | - | - | 30.0 | 0.0 | 8 | - | 17 | | - | - | 0.5 | 5.2 | 8 | 12.9 | 04 | 139 | 13.9 |
| EP273 | Inv. | 18 | - | - | 30.0 | 0.0 | 8 | - | 10 | | 7 | - | 0.5 | 4.2 | 8 | 13.9 | 0.4 | 134 | 15.3 |
| EP280 | Ref. | 18 | - | - | 32.0 | 0.0 | 8 | - | - | | - | 15 | 0.5 | 4.4 | 8 | 13.7 | 0.4 | 145 | 14.2 |
| EP281 | Ref. | 18 | - | - | 26.0 | 0.0 | 12 | - | 18 | | - | - | 0.5 | 4.2 | 8 | 12.9 | 0.4 | 139 | 14.9 |
| EP282 | Ref. | 18 | - | - | 28.0 | 0.0 | - | 10 | 17 | | - | - | 0.5 | 4.3 | 8 | 13.8 | 0.4 | 140 | 12.9 |
| EP283 | Ref. | 15 | - | - | 29.0 | 0.0 | 12 | - | 17 | | - | - | 0.5 | 4.1 | 8 | 14 | 0.4 | 132 | 19.6 |
| EP383 | Ref. | 15 | - | - | 33.0 | 0.0 | 10 | - | - | | - | 15 | 0.3 | 4.5 | 8 | 13.8 | 0.4 | 143 | 15 |
| EP384 | Ref. | - | - | - | 58.6 | 14.4 | - | - | - | | - | - | 0.84 | 6 | 8 | 11.76 | 0.4 | 125 | - |
| *A combination of calcium oxide, calcium carbonate and wollastonite. | | | | | | | | | | | | | | | | | | | |

**Table 2b**

| Formulation | | Tactix 742 | Tactix 556 | Tactix 756 | DER 331 | DER 671 | LER-rubber | CSR | Toughener A | | Toughener B | Toughener C | Accelerator A | hardener | fumed silica | mineral filler* | colorant | Tg | Impact Peel Resist. at RT [N/mm] |
|---|---|---|---|---|---|---|---|---|---|---|---|---|---|---|---|---|---|---|---|
| | | [wt%] | [wt%] | [wt%] | [wt%] | [wt%] | [wt%] | [wt%] | [wt%] | | [wt%] | [wt%] | [wt%] | [wt%] | [wt%]] | [wt%] | [wt%] | [°C] (DSC) | |
| EP284 | Ref. | 15 | - | - | 31.0 | 0.0 | 10 | - | 17 | | - | - | 0.3 | 4.3 | 8 | 14 | 0.4 | 140 | 18 |
| EP306 | Ref. | 23 | - | - | 21.6 | 5.4 | 8 | | 14 | | - | - | 0 | 5.1 | 8 | 14.5 | 0.4 | 157 | 9.3 |
| EP372 | Ref. | 15 | - | - | 31.0 | 0.0 | 10 | - | 17 | | - | - | 0.8 | 5.2 | 8 | 12.6 | 0.4 | 134 | 18 |
| EP373 | Ref. | - | 15 | - | 30.0 | 0.0 | 10 | - | 14 | | - | - | 0 | 5.5 | 8 | 14.1 | 0.4 | 109 | 32 |
| EP374 | Ref. | - | - | 15 | 31.0 | 0.0 | 10 | - | 17 | | - | - | 0.3 | 3.8 | 8 | 14.5 | 0.4 | 120 | 26 |
| *A combination of calcium oxide, calcium carbonate and wollastonite. | | | | | | | | | | | | | | | | | | | |

**Table 2c**

| Formulation | | Tactix 742 | Tactix 556 | Tactix 756 | DER 331 | DER 671 | LER-rubber | CSR | Toughener A | | Toughener B | Toughener C | Accelerator A | hardener | fumed silica | mineral filler* | colorant | Tg | Impact Peel Resist. at RT [N/mm] |
|---|---|---|---|---|---|---|---|---|---|---|---|---|---|---|---|---|---|---|---|
| | | [wt%] | [wt%] | [wt%] | [wt%] | [wt%] | [wt%] | [wt%] | [wt%] | | [wt%] | [wt%] | [wt%] | [wt%] | [wt%] | [wt%] | [wt%] | [°C] (DSC) | |
| EP307 | Ref. | 23 | - | - | 28.0 | 0.0 | 8 | | 14 | | - | - | 0 | 4.5 | 8 | 14.1 | 0.4 | 146 | 8.2 |
| EP308 | Ref. | 18 | - | - | 33.0 | 0.0 | 8 | - | 14 | | - | - | 0 | 4.5 | 8 | 14.1 | 0.4 | 146 | 10.5 |
| EP339 | Ref. | 20 | - | - | 28.0 | 0.0 | 8 | - | 16 | | - | - | 0 | 5.4 | 8 | 14.2 | 0.4 | 153 | 10.8 |
| EP340 | Ref. | 18 | - | - | 30.0 | 0.0 | - | 8 | 16 | | - | - | 0 | 5.4 | 8 | 14.2 | 0.4 | 148 | 11.9 |
| EP341 | Ref. | 16 | - | - | 32.0 | 0.0 | - | 8 | 16 | | - | - | 0 | 5.4 | 8 | 142 | 04 | 146 | 12.9 |
| EP346 | Ref. | 20 | - | - | 24.0 | 0.0 | 10 | - | 18 | | - | - | 0 | 5 | 8 | 14.6 | 0.4 | 147 | 12.2 |
| EP353 | Ref.. | 17 | - | - | 31.0 | 0.0 | 8 | - | 17 | | - | - | 0.3 | 4.5 | 8 | 13.8 | 0.4 | 144 | 13.8 |
| EP354 | Inv. | 17 | - | - | 31.0 | 0.0 | 8 | - | - | | 17 | - | 0.3 | 4.5 | 8 | 13.8 | 0.4 | 132 | 15.6 |
| *A combination of calcium oxide, calcium carbonate and wollastonite. | | | | | | | | | | | | | | | | | | | |

**Table 3**

| | Rheology | | DMA | DSC | | | Lap shear strength | E-Modulus | Tensile strength | Elong. at break | Impact peel resistance [N/mm] | |
|---|---|---|---|---|---|---|---|---|---|---|---|---|
| Formulation | Viscosity Casson [Pas] | Yield stress Casson [Pa] | Tg [°C] | Onset [°C] | Peak [°C] | Tg [°C] | [MPa] | [MPa] | [MPa] | [%]] | RT | -40°C |
| E0 | 46 | 307 | 111 | 163 | 181 | 100 | 18.9 | 1800 | 31 | 7.3 | 35 | 27 |
| EP270* | | | | 168 | 182 | 124 | 17.6 | | | | 19.2 | 11.5 |
| EP271* | | | | 167 | 181 | 137 | 16.2 | | | | 15.7 | 8.5 |
| EP272* | | | | 175 | 187 | 141 | | | | | | |
| EP273* | 30 | 508 | | 189 | 198 | 148 | 16.3 | 1996 | 38.9 | 4.5 | 12.6 | |
| EP274* | 15 | 274 | | 191 | 202 | 157 | 14.1 | 2857 | 48.2 | 3.3 | 6.3 | |
| EP277* | 27 | 474 | | 170 | 182 | 130 | 16.8 | | | | 14.1 | |
| EP278* | | | | 170 | 183 | 139 | 16.8 | | | | 13.9 | |
| EP279 | 44 | 456 | | 167 | 181 | 134 | | | | | 15.3 | |
| EP280* | 57 | 417 | | 170 | 181 | 145 | | | | | 14.2 | |
| EP281* | 37 | 414 | | 168 | 182 | 139 | | | | | 14.9 | |
| EP282* | 31 | 530 | | 169 | 182 | 140 | | | | | 12.9 | |
| EP283* | 38 | 437 | | 167 | 181 | 132 | 16.9 | 1395 | 30.9 | 4.8 | 19.6 | 13.3 |
| EP284* | 33 | 481 | 155.4 | 173 | 183 | 140 | 18.6 | 1570 | 30.1 | 4.3 | 18 | 14.4 |
| EP306* | 34 | 548 | 174.4 | 191 | 201 | 157 | 14.8 | 2012 | 34.5 | 3.5 | 9.3 | |
| EP307* | 39 | 531 | | 188 | 199 | 146 | 13.7 | 1957 | 31.8 | 3.1 | 8.2 | |
| EP308* | 32 | 482 | | 188 | 199 | 146 | 15.3 | 1873 | 31.7 | 3.3 | 10.5 | |
| EP339* | 26 | 516 | 166.8 | 190 | 200 | 153 | 16.1 | | | | 10.8 | |
| EP340* | 24 | 547 | 161 | 190 | 198 | 148 | 15.4 | | | | 11.9 | |
| EP341* | 20 | 468 | 156.2 | 183 | 198 | 146 | 19.3 | 2056 | 39 | 4.4 | 12.9 | |
| EP346* | | | | 190 | 199 | 147 | 17.2 | | | | 12.2 | |
| EP353* | 24 | 492 | | 175 | 190 | 144 | 18.5 | | | | 13.8 | |
| EP354 | 61 | 505 | | 175 | 191 | 132 | 18.7 | | | | 15.6 | |

| | | | | | | | | | | | | |
|---|---|---|---|---|---|---|---|---|---|---|---|---|
| * Reference Example | | | | | | | | | | | | |

## Claims

1. An epoxy composition comprising:
a) 2 to 30 wt.% of a trifunctional epoxy resin, based on weight of the epoxy composition;
b) a DGEBA (diglycidyl ether of bisphenol A) epoxy resin;
c) a polyphenolic blocked polyurethane;
d) a filler;
e) a hardener; and
f) a curing accelerator;
wherein the trifunctional epoxy resin comprises an epoxy based on tris-(hydroxyl phenyl)-methane.

2. The epoxy composition of claim 1, wherein the trifunctional epoxy resin comprises a compound of formula:

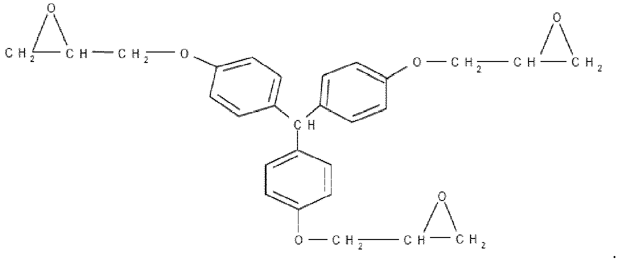

3. The epoxy composition of any of the preceding claims, comprising 5 to 50 wt% liquid DGEBA epoxy resin, based on weight of the epoxy composition.

4. The epoxy composition of any of the preceding claims, comprising 0 to 20 wt% solid DGEBA epoxy resin, based on weight of the epoxy composition.

5. The epoxy composition of any of the preceding claims, comprising 10 to 30 wt% of the polyphenolic blocked polyurethane, base on weight of the epoxy composition.

6. The epoxy composition of any of the preceding claims, comprising 10 to 25 wt% of the filler, based on weight of the composition.

7. The epoxy composition of any of the preceding claims, comprising 3 to 7 wt% of the hardener, based on weight of the composition.

8. The epoxy composition of claim 7, wherein the hardener comprises dicyandiamide.

9. The epoxy composition of any of the preceding claims, comprising 0.2 to 1.5 wt% of the curing accelerator, based on weight of the composition.

10. A cured adhesive composition obtained by curing the epoxy composition of any of the preceding claims.

11. The cured adhesive composition of claim 10, wherein the curing comprises exposing the epoxy composition to a temperature in excess of 140° C.

12. The cured adhesive composition of claim 10 or 11, having a Tg at least 110° C, wherein the T_{g} is determined by DSC according to the method disclosed in the specification.

13. The cured adhesive composition of claim 12, having a Tg at least 120° C, wherein the T_{g} is determined by DSC according to the method disclosed in the specification.

14. The cured adhesive composition of any of claims 10 to 12, having an impact peel resistance of 8 to 25 N/mm, wherein the impact peel resistance is determined by ISO 11343 according to the method disclosed in the specification.

## Patentansprüche

1. Epoxidzusammensetzung, umfassend:
a) 2 bis 30 Gew.-% eines trifunktionellen Epoxidharzes, auf das Gewicht der Epoxidzusammensetzung bezogen;
b) ein DGEBA- (Diglycidylether von Bisphenol A) Epoxidharz;
c) ein polyphenolisches geblocktes Polyurethan;
d) einen Füllstoff;
e) ein Härtungsmittel; und
f) einen Härtungsbeschleuniger;
wobei das trifunktionelle Epoxidharz ein Epoxid umfasst, das auf Tris-(hydroxylphenyl)-methan basiert.

2. Epoxidzusammensetzung nach Anspruch 1, wobei das trifunktionelle Epoxidharz eine Verbindung der folgenden Formel umfasst:

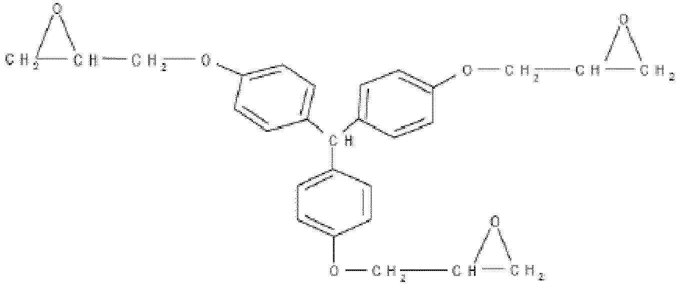

3. Epoxidzusammensetzung nach einem der vorhergehenden Ansprüche, 5 bis 50 Gew.-% flüssiges DGEBA-Epoxidharz, auf das Gewicht der Epoxidzusammensetzung bezogen, umfassend.

4. Epoxidzusammensetzung nach einem der vorhergehenden Ansprüche, 0 bis 20 Gew.-% festes DGEBA-Epoxidharz, auf das Gewicht der Epoxidzusammensetzung bezogen, umfassend.

5. Epoxidzusammensetzung nach einem der vorhergehenden Ansprüche, 10 bis 30 Gew.-% des polyphenolischen geblockten Polyurethans, auf das Gewicht der Epoxidzusammensetzung bezogen, umfassend.

6. Epoxidzusammensetzung nach einem der vorhergehenden Ansprüche, 10 bis 25 Gew.-% des Füllstoffs, auf das Gewicht der Zusammensetzung bezogen, umfassend.

7. Epoxidzusammensetzung nach einem der vorhergehenden Ansprüche, 3 bis 7 Gew.-% des Härtungsmittels, auf das Gewicht der Zusammensetzung bezogen, umfassend.

8. Epoxidzusammensetzung nach Anspruch 7, wobei das Härtungsmittel Dicyandiamid umfasst.

9. Epoxidzusammensetzung nach einem der vorhergehenden Ansprüche, 0,2 bis 1,5 Gew.-% des Aushärtungsbeschleunigers, auf das Gewicht der Zusammensetzung bezogen, umfassend.

10. Ausgehärtete Klebstoffzusammensetzung, die durch Aushärten der Epoxidzusammensetzung nach einem der vorhergehenden Ansprüche erhalten wird.

11. Ausgehärtete Klebstoffzusammensetzung nach Anspruch 10, wobei das Aushärten das Aussetzen der Epoxidzusammensetzung einer Temperatur über 140 °C umfasst.

12. Ausgehärtete Klebstoffzusammensetzung nach Anspruch 10 oder 11, die eine T_{g} von mindestens 110 °C aufweist, wobei die T_{g} durch DSC dem in der Beschreibung offenbarten Verfahren entsprechend bestimmt wird.

13. Ausgehärtete Klebstoffzusammensetzung nach Anspruch 12, die eine T_{g} von mindestens 120 °C aufweist, wobei die T_{g} durch DSC dem in der Beschreibung offenbarten Verfahren entsprechend bestimmt wird.

14. Ausgehärtete Klebstoffzusammensetzung nach einem der Ansprüche 10 bis 12, die eine Aufprallabschälresistenz von 8 bis 25 N/mm aufweist, wobei die Aufprallabschälresistenz durch ISO 11343 dem in der Beschreibung offenbarten Verfahren entsprechend bestimmt wird.

## Revendications

1. Composition époxy comprenant :
a) 2 à 30 % en poids d'une résine époxy trifonctionnelle, sur la base du poids de la composition époxy ;
b) une résine époxy DGEBA (éther diglycidylique de bisphénol A) ;
c) un polyuréthane polyphénolique bloqué ;
d) une charge ;
e) un agent de durcissement ; et
f) un accélérateur de durcissement ;
dans laquelle la résine époxy trifonctionnelle comprend un époxy à base de tris-(hydroxyl phényl)-méthane.

2. Composition époxy selon la revendication 1, la résine époxy trifonctionnelle comprenant un composé de formule :

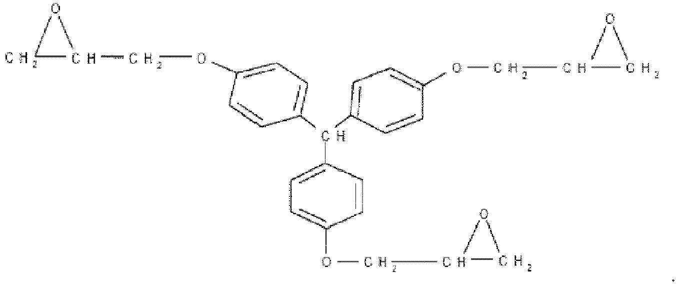

3. Composition époxy selon l'une quelconque des revendications précédentes, comprenant de 5 à 50 % en poids de résine époxy DGEBA liquide, sur la base du poids de la composition époxy.

4. Composition époxy selon l'une quelconque des revendications précédentes, comprenant de 0 à 20 % en poids de résine époxy DGEBA solide, sur la base du poids de la composition époxy.

5. Composition époxy selon l'une quelconque des revendications précédentes, comprenant de 10 à 30 % en poids du polyuréthane polyphénolique bloqué, sur la base du poids de la composition époxy.

6. Composition époxy selon l'une quelconque des revendications précédentes, comprenant de 10 à 25 % en poids de la charge, sur la base du poids de la composition.

7. Composition époxy selon l'une quelconque des revendications précédentes, comprenant de 3 à 7 % en poids de l'agent de durcissement, sur la base du poids de la composition.

8. Composition époxy selon la revendication 7, l'agent de durcissement comprenant du dicyandiamide.

9. Composition époxy selon l'une quelconque des revendications précédentes, comprenant de 0,2 à 1,5 % en poids de l'accélérateur de durcissement, sur la base du poids de la composition.

10. Composition adhésive durcie obtenue par durcissement de la composition époxy selon l'une quelconque des revendications précédentes.

11. Composition adhésive durcie selon la revendication 10, le durcissement comprenant l'exposition de la composition époxy à une température dépassant 140 °C.

12. Composition adhésive durcie selon la revendication 10 ou 11, ayant une T_{g} d'au moins 110 °C, la T_{g} étant déterminée par ACD selon le procédé décrit dans la description.

13. Composition adhésive durcie selon la revendication 12, ayant une T_{g} d'au moins 120 °C, la T_{g} étant déterminée par ACD selon le procédé décrit dans la description.

14. Composition adhésive durcie selon l'une quelconque des revendications 10 à 12, ayant une résistance au décollement aux chocs de 8 à 25 N/mm, la résistance au décollement aux chocs étant déterminée selon la norme ISO 11343 selon le procédé décrit dans la description.
